# FASCICULE DE BREVET EUROPEEN

(11) **EP 3 638 640 B1**
(45) Date de publication et mention de la délivrance du brevet: **19.05.2021**
(21) Numéro de dépôt: 18749424.0
(22) Date de dépôt: 13.06.2018
(51) Int. Cl.: C04B 35/571, C04B 35/626, C04B 35/628, C04B 35/632, C04B 35/80

(54) **PROCÉDÉ DE FABRICATION D'UNE PIÈCE EN MATÉRIAU COMPOSITE**
VERFAHREN ZUR HERSTELLUNG EINES VERBUNDTEILS
PROCESS FOR MANUFACTURING A COMPOSITE PART

(30) Priorité: 13.06.2017 FR 1700619
(43) Date de publication de la demande: 22.04.2020
(73) Titulaire: Safran Ceramics, 33185 Le Haillan (FR); ArianeGroup SAS, 75015 Paris (FR)
(72) Inventeur: EBERLING-FUX, Nicolas, 77550 Moissy-Cramayel (FR); BOUILLON, Eric, 77550 Moissy-Cramayel (FR); JACOB, Guy, 91710 Vert-Le-Petit (FR); GOULLIANNE, Eddy, 77550 Moissy-Cramayel (FR)
(74) Mandataire: Cabinet Beau de Loménie
(86) Numéro de dépôt international: PCT/FR2018/051384
(87) Numéro de publication internationale: WO 2018/229428

(56) Documents cités:
- CN-A- 105 951 301
- FR-A1- 2 686 874
- FR-A1- 2 933 970
- FR-A1- 2 953 885

## Description

La présente invention concerne un procédé de fabrication d'une pièce en matériau composite à matrice au moins partiellement en céramique ayant des propriétés mécaniques améliorées.

### Arrière-plan de l'invention

Des pièces en matériau composite à matrice au moins partiellement en céramique peuvent classiquement être obtenues par une technique d'imprégnation et de pyrolyse de polymère (« Polymer Imprégnation and Pyrolysis » ; « PIP »).

Selon une telle technique, une composition liquide d'un polymère précurseur de céramique est introduite dans la porosité d'une préforme fibreuse. La composition ainsi introduite est ensuite polymérisée puis pyrolysée afin de former la phase de matrice céramique. Divers types de matrices céramiques peuvent être formées par cette méthode en fonction du choix du précurseur utilisé. On peut, en particulier, utiliser un polymère polysilazane afin d'obtenir une matrice SiCN, un polymère polycarbosilane afin d'obtenir une matrice SiC ou un polymère polysiloxane afin d'obtenir une matrice SiCO.

Il est habituel de répéter ces cycles d'infiltration et de pyrolyse plusieurs fois de suite afin d'obtenir le taux de porosité souhaité pour la pièce densifiée, étant donné que la transformation en céramique par pyrolyse implique un retrait volumique.

Il est souhaitable d'améliorer les propriétés mécaniques présentées par les pièces en matériau composite dont la matrice a été au moins en partie formée par une technique PIP Les documents FR2933970, FR2686874 et FR2953885 mentionnent des procédés pour préparer des matériaux composites avec une matrice céramique.

### Objet et résumé de l'invention

L'invention vise, selon un premier aspect, un procédé de fabrication d'une pièce en matériau composite comprenant au moins les étapes suivantes :
- introduction d'un promoteur d'adhésion dans la porosité d'une préforme fibreuse formée par des fils revêtus par un revêtement présentant à sa surface des groupements -OH, le promoteur d'adhésion comprenant un groupement G1 électroattracteur réactif selon une réaction de substitution ou d'addition nucléophile avec les groupements -OH, et un groupement réactif G2 choisi parmi : une fonction hydroxyle, un époxyde, un atome d'halogène, une fonction amine, une fonction carbonyle, une double liaison carbone-carbone ou une triple liaison carbone-carbone,
- greffage du promoteur d'adhésion à la surface du revêtement par réaction de substitution ou d'addition nucléophile des groupements -OH sur le groupement G1, ce greffage étant réalisé par un premier chauffage de la préforme fibreuse dans laquelle a été introduit le promoteur d'adhésion,
- introduction d'une résine précurseur de céramique dans la porosité de la préforme fibreuse, après l'étape de greffage du promoteur d'adhésion,
- polymérisation de la résine introduite et liaison du promoteur d'adhésion greffé à la résine par réaction chimique entre ces deux composés au niveau du groupement G2, cette polymérisation et cette liaison étant réalisées par un deuxième chauffage de la préforme fibreuse dans laquelle a été introduite la résine, et
- formation d'une phase de matrice céramique dans la porosité de la préforme fibreuse par pyrolyse de la résine polymérisée.

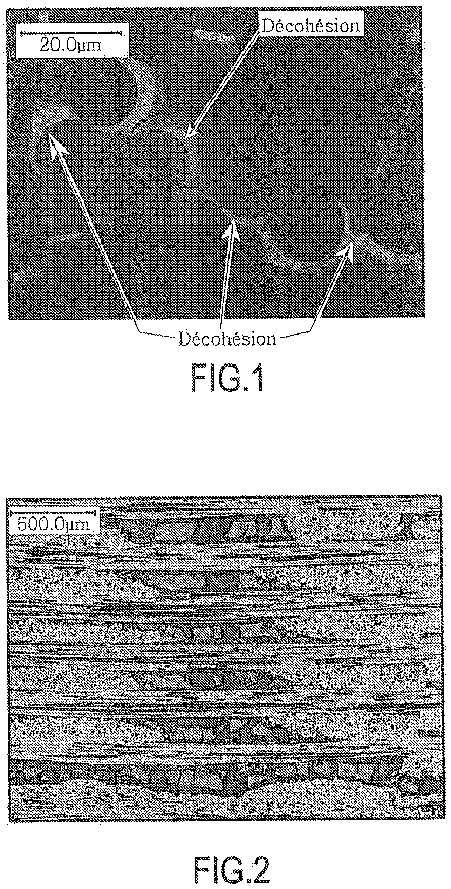

Les inventeurs ont mené des études sur les pièces ayant une matrice obtenue par une technique PIP. Ces études ont permis d'identifier qu'une limitation des propriétés mécaniques de ces pièces provenait d'un problème d'adhésion aux interfaces de la matrice PIP. Les inventeurs ont, en effet, constaté l'existence de décohésions entre le précurseur de céramique à l'état polymérisé et un revêtement formé au préalable sur les fils (voir figure 1). Dans l'essai associé à la figure 1, le revêtement était une couche d'interphase de carbone pyrolytique (PyC) recouvrant les fils. La figure 2 montre, quant à elle, l'existence de décohésions entre la phase de matrice obtenue après pyrolyse du précurseur et un revêtement de carbure de silicium (SiC) formé, au préalable, sur les fils. L'existence de ces décohésions se traduit par des propriétés mécaniques sous-optimales pour les pièces obtenues.

La présente invention a été développée afin de résoudre ce problème et met ainsi en œuvre un promoteur d'adhésion permettant d'améliorer l'adhésion entre la phase de matrice PIP et un revêtement formé au préalable sur les fils. Ce revêtement formé au préalable peut être de différentes natures, comme il sera décrit plus bas. Le promoteur d'adhésion est apte, de par le groupement G1, à être greffé de manière covalente au revêtement sous-jacent. Le promoteur d'adhésion est greffé au niveau de groupements -OH pendants présents à la surface du revêtement, qui sont naturellement présents après exposition du revêtement à l'air ambiant. Le promoteur d'adhésion est, en outre, apte, de par le groupement G2, à réagir chimiquement avec la résine. Cette réaction permet de lier de manière covalente le promoteur à la résine précurseur de céramique. Le promoteur d'adhésion constitue ainsi un intermédiaire de liaison entre la résine, c'est-à-dire au final la phase de matrice PIP, et le revêtement sous-jacent, permettant ainsi d'améliorer l'adhésion de cette phase de matrice à ce revêtement. L'emploi du promoteur d'adhésion proposé par la présente invention contribue ainsi à améliorer les propriétés mécaniques de la pièce en matériau composite obtenue.

Dans un exemple de réalisation, le procédé comprend en outre, avant introduction du promoteur, une étape de formation du revêtement sur les fils par dépôt ou infiltration chimique en phase vapeur (« Chemical Vapor Déposition » ou « Chemical Vapor Infiltration » ; « CVD » ou « CVI »).

Dans ce cas, le revêtement peut être une interphase ou une phase de matrice préliminaire. Dans cet exemple, l'emploi du promoteur d'adhésion améliore l'adhésion de la phase de matrice PIP formée directement sur ce revêtement.

En variante, le procédé comprend en outre, avant introduction du promoteur, une étape de formation du revêtement sur les fils par introduction d'un composé précurseur dans la porosité de la préforme et pyrolyse de ce composé précurseur.

Dans ce cas, le revêtement constitue une phase de matrice préliminaire PIP et l'emploi du promoteur d'adhésion améliore l'adhésion entre deux blocs de matrice PIP formés successivement. On notera que lorsque la matrice est formée à partir d'une pluralité de blocs de matrice PIP, il est possible de mettre en oeuvre le procédé décrit plus haut afin d'améliorer l'adhésion entre chacun de ces blocs.

Dans un exemple de réalisation, le matériau formant la surface du revêtement est choisi parmi : le carbone, en particulier le carbone pyrolytique, le carbone dopé au bore, le carbure de silicium, le nitrure de bore, le nitrure de bore dopé au silicium ou le nitrure de silicium.

Dans un exemple de réalisation, le groupement G1 est choisi parmi : un époxyde, une fonction carboxylique, un atome d'halogène, une double liaison carbone-carbone ou une triple liaison carbone-carbone.

Dans un exemple de réalisation, le groupement G2 est choisi parmi : une fonction hydroxyle, une fonction amine ou une double liaison carbone-carbone.

Dans un exemple de réalisation, le promoteur d'adhésion présente, à l'état monomère, la formule générale suivante : G1 - E - G2, où E désigne une chaîne carbonée comprenant entre 1 et 10 atomes de carbone ou une chaîne silane, siloxane, silazane ou carbosilane comprenant entre 1 et 10 atomes de silicium.

E peut par exemple être une chaîne carbonée aliphatique ou aromatique. E peut être une chaîne linéaire ou ramifiée. A l'état monomère, le promoteur peut présenter un seul groupement G2 ou plusieurs groupements G2.

En particulier, E désigne une chaîne carbonée comprenant entre 1 et 5 atomes de carbone. En variante, E désigne une chaîne silane, siloxane, silazane ou carbosilane comprenant entre 1 et 5 atomes de silicium.

En particulier, le promoteur d'adhésion est un halogénosilane.

Dans un exemple de réalisation, la résine est choisie parmi : les résines polysiloxane, les résines polysilazane, les résines polycarbosiloxane, les résines polycarbosilane, et les mélanges de telles résines.

### Brève description des dessins

D'autres caractéristiques et avantages de l'invention ressortiront de la description suivante, donnée à titre non limitatif, en référence aux dessins annexés, sur lesquels :
- la figure 1 est une photographie montrant l'existence de décohésions entre un précurseur céramique à l'état polymérisé et un revêtement de PyC formé sur des fils (hors invention),
- la figure 2 est une photographie montrant l'existence de décohésions entre une phase de matrice PIP et un revêtement de SiC formé sur des fils (hors invention),
- les figures 3A à 3D illustrent, de manière schématique, différentes étapes d'un exemple de procédé selon l'invention,
- la figure 4 montre un résultat de mesure par analyse par spectrométrie photoélectronique X réalisé, après le greffage d'un promoteur d'adhésion, dans le cadre d'un premier exemple de procédé selon l'invention,
- les figures 5A à 5C sont des photographies du matériau composite obtenu lors du premier exemple de procédé selon l'invention, et
- les figures 6A à 6C sont des photographies du matériau composite obtenu lors du deuxième exemple de procédé selon l'invention.

### Description détaillée de modes de réalisation

Dans un premier temps, une préforme fibreuse formée de fils réfractaires, comme des fils céramiques ou carbone, est formée.

La préforme peut par exemple être formée de fils de carbure de silicium fournis par la société japonaise NGS sous la référence « Nicalon », « Hi-Nicalon » ou encore « Hi-Nicalon Type S ». Les fils de carbone utilisables pour former cette préforme sont, par exemple, fournis sous la dénomination Torayca T300 3K par la société Toray.

La préforme fibreuse est obtenue à partir d'au moins une opération textile. La préforme fibreuse est destinée à constituer le renfort fibreux de la pièce à obtenir. La préforme fibreuse peut, en particulier, être obtenue par tissage multicouches ou tridimensionnel.

Par « tissage tridimensionnel » ou « tissage 3D », il faut comprendre un mode de tissage par lequel certains au moins des fils de chaîne lient des fils de trame sur plusieurs couches de trame. Une inversion des rôles entre chaine et trame est possible dans le présent texte et doit être considérée comme couverte aussi par les revendications.

La préforme fibreuse peut, par exemple, présenter une armure multi-satin, c'est-à-dire être un tissu obtenu par tissage tridimensionnel avec plusieurs couches de fils de trame dont l'armure de base de chaque couche est équivalente à une armure de type satin classique mais avec certains points de l'armure qui lient les couches de fils de trame entre elles. En variante, la préforme fibreuse peut présenter une armure interlock. Par « armure ou tissu interlock », il faut comprendre une armure de tissage 3D dont chaque couche de fils de chaîne lie plusieurs couches de fils de trame avec tous les fils de la même colonne de chaîne ayant le même mouvement dans le plan de l'armure. Différents modes de tissage multicouches utilisables pour former la préforme fibreuse sont décrits dans le document WO 2006/136755.

Il est aussi possible de former d'abord des textures fibreuses telles que des tissus bidimensionnels ou des nappes unidirectionnelles, et d'obtenir la préforme fibreuse par drapage de telles textures fibreuses sur une forme. Ces textures peuvent éventuellement être liées entre elles par exemple par couture ou implantation de fils pour former la préforme fibreuse.

Le revêtement est ensuite formé sur les fils de la préforme. Ce revêtement peut être une interphase ou comporter une ou plusieurs phases de matrice densifiant partiellement la préforme fibreuse. Le revêtement peut être en carbone, en particulier en PyC, en carbone dopé au bore (BC, avec du bore en une proportion atomique comprise entre 5% et 20%, le complément étant du carbone) ou en matériau céramique, comme le carbure de silicium, le nitrure de bore (BN), le nitrure de bore dopé au silicium (BN(Si), avec du silicium en une proportion massique comprise entre 5% et 40%, le complément étant du nitrure de bore) ou le nitrure de silicium (Si₃N₄).

Le revêtement peut ainsi être formé par une interphase monocouche ou multicouches. Auquel cas, la surface de l'interphase présente les groupements -OH destinés à permettre le greffage du promoteur d'adhésion. Cette interphase peut comporter au moins une couche de carbone pyrolytique, de nitrure de bore, de nitrure de bore dopé au silicium ou de carbone dopé au bore.

L'interphase a ici une fonction de défragilisation du matériau composite qui favorise la déviation de fissures éventuelles parvenant à l'interphase après s'être propagées dans la matrice, empêchant ou retardant la rupture des fils par de telles fissures.

L'épaisseur de l'interphase peut être comprise entre 10 nm et 1000 nm, et par exemple entre 10 nm et 100 nm. L'interphase peut être formée par CVI sur les fils de la préforme.

On pourrait, en variante, former l'interphase par dépôt chimique en phase vapeur sur les fils avant formation de la préforme, puis former cette préforme à partir des fils ainsi revêtus.

En variante, le revêtement peut comporter au moins une phase de matrice préliminaire et éventuellement une interphase interposée entre ladite au moins une phase de matrice préliminaire et les fils. Auquel cas, la la phase de matrice préliminaire externe, i.e. la plus éloignée des fils de la préforme, présente sur sa surface les groupements -OH destinés à permettre le greffage du promoteur d'adhésion.

La phase de matrice préliminaire externe peut être formée par différentes méthodes connues en soi, comme la CVI, l'infiltration de silicium à l'état fondu (procédé de « Melt-Infiltration ») ou par une technique PIP. On notera donc que, dans ce dernier cas, le promoteur d'adhésion permet d'améliorer l'adhésion entre deux blocs de matrice PIP successifs. La phase de matrice préliminaire externe peut être céramique ou en carbone. La phase de matrice préliminaire externe peut être en carbone, voire en PyC, en carbure de silicium, en nitrure de bore ou en nitrure de silicium.

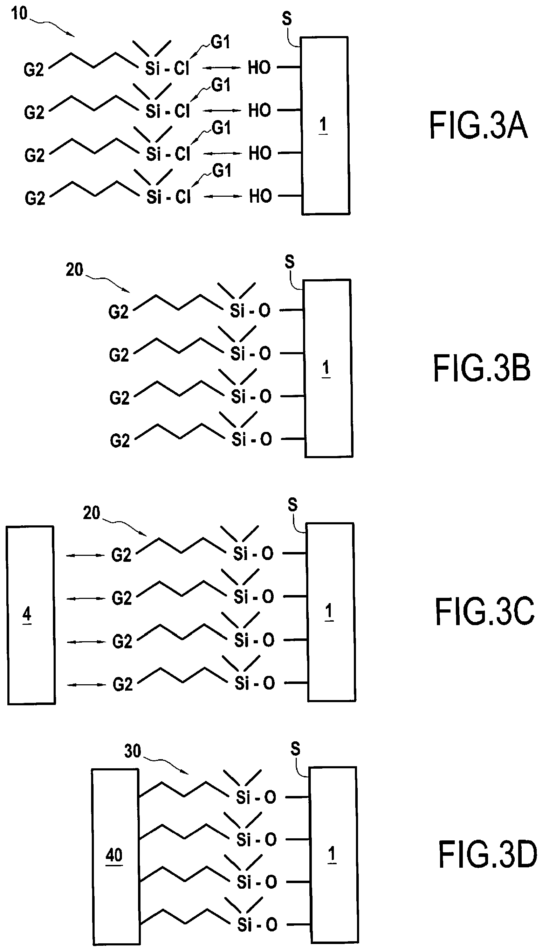

Bien entendu, la préforme fibreuse reste poreuse, après formation du revêtement, afin de permettre la formation d'une phase de matrice céramique PIP reliée au revêtement par l'intermédiaire du promoteur d'adhésion. Cet aspect va, à présent, être décrit au travers d'un exemple de procédé selon l'invention, illustré aux figures 3A à 3D.

Après formation du revêtement, le promoteur d'adhésion 10 est introduit dans la porosité résiduelle de la préforme fibreuse (voir figure 3A). Le promoteur d'adhésion 10 peut être introduit à l'état liquide dans la porosité de la préforme fibreuse. Le promoteur d'adhésion 10 peut être injecté dans la porosité de la préforme fibreuse. Le promoteur d'adhésion 10 introduit est au contact de la surface S du revêtement 1 portant les groupements -OH. Cette surface S correspond à la surface externe du revêtement 1, i.e. à la surface la plus éloignée des fils formant la préforme.

Dans l'exemple illustré, le promoteur 10 présente, à l'état monomère, la formule générale suivante : G1 - E - G2. Le groupement G1 est ici un atome de chlore et la chaîne E est ici une chaine carbosilane à un atome de silicium. Le promoteur d'adhésion 10 est ici un chlorosilane. Diverses variantes sont possibles pour les groupements G1 et G2 et pour la chaîne E, comme indiqué précédemment.

Dans l'exemple illustré, le promoteur 10 a été introduit à l'état monomère. On ne sort toutefois pas du cadre de l'invention lorsque le promoteur 10 est introduit à l'état oligomère.

Le groupement G1 permet le greffage du promoteur 10 au revêtement 1. Le groupement G2 permet la liaison du promoteur à la résine précurseur de céramique, et donc *in fine* à la phase de matrice céramique obtenue après pyrolyse.

Un premier chauffage est réalisé afin de greffer le promoteur 10 sur la surface S du revêtement 1. Ce premier chauffage permet d'activer une réaction de substitution ou d'addition nucléophile des groupements -OH de la surface S sur le groupement G1 et d'aboutir ainsi au greffage du promoteur 10. Dans l'exemple illustré, le greffage est réalisé par une réaction de substitution nucléophile. Après greffage, il est obtenu un promoteur greffé 20 à la surface S du revêtement 1 du fait de la formation d'une liaison covalente entre l'oxygène des groupements -OH et la chaîne E précitée (voir figure 3B).

Une température sensiblement constante (+/-2°C) peut être imposée durant le premier chauffage. Il va des connaissances générales de l'homme du métier de déterminer la valeur de température à imposer durant le premier chauffage en fonction du promoteur d'adhésion. La température imposée durant le premier chauffage peut typiquement être comprise entre 30°C et 60°C.

Après greffage, le promoteur greffé 20 présente toujours au moins un groupement G2 pendant destiné à réagir avec la résine précurseur de céramique (voir figure 3B).

Une fois le promoteur d'adhésion 20 greffé, une résine 4 précurseur de céramique est introduite dans la porosité de la préforme fibreuse (voir figure 3C). La résine 4 introduite est au contact du promoteur greffé 20. La résine 4 peut être introduite à l'état liquide dans la porosité de la préforme fibreuse. La résine 4 peut être injectée dans la porosité de la préforme fibreuse. Cette résine 4 est connue en soi, et peut être choisie parmi : les résines polysiloxane, les résines polysilazane, les résines polycarbosiloxane, les résines polycarbosilane, et les mélanges de telles résines.

Une fois la résine 4 introduite, celle-ci va se lier, de manière covalente, au promoteur greffé 20. Cette liaison est réalisée par une réaction chimique entre le groupement G2 du promoteur greffé 20 et une fonction réactive portée par la résine 4. A titre d'exemple, la fonction réactive de la résine 4 peut être choisie parmi les groupements suivants : -OH, Si-H ou une double liaison carbone-carbone.

Avantageusement, le groupement G2 est choisi parmi : -OH, - NH₂ ou une double liaison carbone-carbone. Le choix de tels groupements G2 permet d'améliorer davantage encore l'adhésion de la résine 4 au promoteur greffé 20. Il est avantageux que G2 soit -OH lorsque la résine est une résine polysiloxane. Il est avantageux que G2 soit -NH₂ lorsque la résine est une résine polysilazane. Il est avantageux que G2 soit une double liaison carbone-carbone lorsque la résine est une résine polysiloxane, polysilazane ou polycarbosilane.

A titre d'exemple, on peut utiliser une résine polycarbosilane commercialisée sous la référence « SMP-10 » par Starfire® Systems. Une telle résine présente des fonctions Si-H et des doubles liaisons carbone-carbone aptes à réagir avec les groupements G2.

A titre d'exemple, on peut utiliser une résine polysilazane commercialisée sous la référence « HTT1800 » ou « PSZ 20 » par Clariant. De telles résines présentent des fonctions Si-H et des doubles liaisons carbone-carbone aptes à réagir avec les groupements G2.

A titre d'exemple, on peut utiliser une résine polysiloxane commercialisée sous la référence « H62C » par Wacker. Une telle résine présente des fonctions Si-H et des doubles liaisons carbone-carbone aptes à réagir avec les groupements G2.

A titre d'exemple, on peut utiliser une résine polysiloxane commercialisée sous la référence « MK » ou « MS100 » par Wacker. De telles résines présentent des fonctions Si-H et des groupements -OH aptes à réagir avec les groupements G2.

A titre d'exemple, on peut utiliser une résine polycarbosiloxane commercialisée sous la référence « SPR212 » ou « SPR036 » par Starfire® Systems. De telles résines présentent des fonctions Si-H et des doubles liaisons carbone-carbone aptes à réagir avec les groupements G2.

La liaison du promoteur d'adhésion greffé 20 à la résine 4 peut être effectuée par différentes réactions chimiques, selon la nature du groupement G2 et de la fonction réactive portée par la résine 4.

A titre d'exemple, lorsque la résine porte une fonction Si-H et le groupement G2 est une double liaison carbone-carbone, la réaction peut être une hydrosilylation conduisant à une liaison Si-C-C.

A titre d'exemple, lorsque la résine porte une fonction Si-H et le groupement G2 est -OH, la réaction peut être une condensation conduisant à une liaison Si-O-Si.

A titre d'exemple, lorsque la résine porte une fonction Si-H et le groupement G2 est -NH₂, la réaction peut être une condensation (transamination) conduisant à une liaison Si-N-Si.

A titre d'exemple, lorsque la résine porte une double liaison carbone-carbone et le groupement G2 est une double liaison carbone-carbone, la réaction peut être une addition conduisant à une liaison C-C-C-C.

La liaison de la résine 4 au promoteur greffé 20 est effectuée en réalisant un deuxième chauffage. Le deuxième chauffage permet, à la fois, de polymériser la résine 4 et d'activer la réaction de liaison de celle-ci au promoteur greffé 20. Il va des connaissances générales de l'homme du métier de déterminer la valeur de température à imposer durant le deuxième chauffage en fonction de la résine et du promoteur greffé 20 mis en œuvre. Une température comprise entre 90°C et 250°C peut typiquement être imposée durant le deuxième chauffage.

La figure 3D montre la liaison de la résine polymérisée 40 au promoteur greffé 30. Dans cette configuration, le promoteur 30 forme un bras de liaison entre la résine polymérisée 40 et le revêtement 1. La résine polymérisée 40 est alors pyrolysée afin de former une phase de matrice céramique dans la porosité de la préforme fibreuse.

Il est à noter que la formation de la matrice de la pièce peut impliquer la réalisation de plusieurs cycles PIP d'introduction et pyrolyse d'une résine précurseur de céramique. Auquel cas, on peut greffer un promoteur d'adhésion à un bloc de matrice obtenu par PIP avant chaque nouvelle introduction de la résine précurseur de céramique. Dans ce cas, le promoteur d'adhésion relie les différents blocs de matrice PIP, afin d'améliorer l'adhésion de ces blocs entre eux.

Une fois obtenue, la pièce ainsi fabriquée peut être une pièce pour application aéronautique ou aérospatiale. La pièce peut être une pièce de partie chaude d'une turbine à gaz d'un moteur aéronautique ou aérospatial ou d'une turbine industrielle. La pièce peut être une pièce de turbomachine. La pièce peut constituer une partie au moins d'un distributeur, une partie au moins d'une tuyère ou d'un revêtement de protection thermique, une paroi d'une chambre de combustion, un secteur d'anneau de turbine ou une aube de turbomachine.

### Exemples

### Exemple 1

Un promoteur d'adhésion a été introduit dans la porosité d'une préforme fibreuse de fils SiC prédensifiée par une phase de matrice préliminaire SiC. Le promoteur d'adhésion utilisé était l'acétoxyéthyldimethylchlorosilane.

Le promoteur d'adhésion ainsi introduit a été greffé à la surface de la phase de matrice préliminaire SiC en réalisant un premier chauffage. La réaction chimique correspondante a été effectuée en réacteur thermorégulé dans du cyclohexane pendant 24 heures en imposant une température de 40°C durant le premier chauffage. Un débit d'azote de 0,6 L/heure a été imposé durant cette réaction.

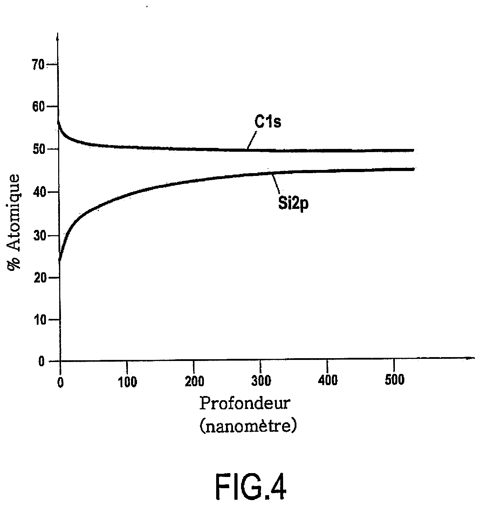

Le greffage du promoteur d'adhésion a été vérifié par analyse par spectrométrie photoélectronique X (« X-Ray photoelectron spectrometry », analyse « XPS »). Le résultat obtenu est fourni à la figure 4 et montre la présence d'une espèce organosiliciée, correspondant au promoteur greffé, en surface de la phase de matrice préliminaire SiC.

Une fois le promoteur greffé, une résine polysiloxane commercialisée sous la référence « MK » par Wacker a été introduite dans la porosité de la préforme fibreuse.

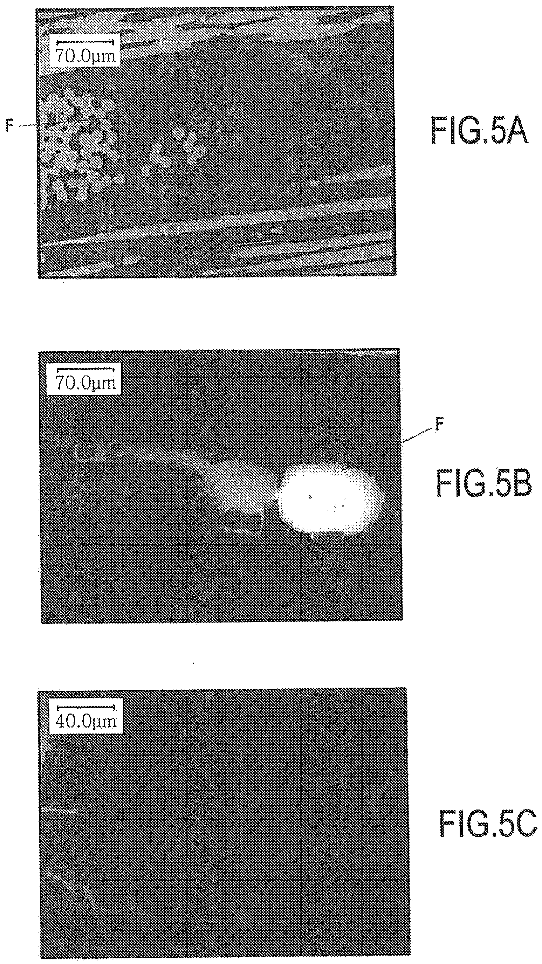

Un deuxième chauffage à 250°C a ensuite été réalisé afin de polymériser la résine introduite et la lier au promoteur d'adhésion greffé. La figure 5A est une photographie du matériau obtenu après polymérisation de la résine polysiloxane et avant sa pyrolyse. Il est constaté l'existence de fissures « F » qui se propagent préférentiellement au sein de la matrice polymérique plutôt qu'à l'interface entre la matrice polymérique et la phase de matrice préliminaire SiC. Cela prouve l'existence d'une adhésion forte de cette matrice polymérique à la matrice préliminaire SiC, et donc au renfort fibreux. Cette forte adhésion est due à la liaison développée entre la résine et le promoteur greffé durant le deuxième chauffage.

Une phase de matrice céramique a ensuite été obtenue par pyrolyse de la résine polysiloxane, en appliquant un traitement thermique à 900°C. Les figures 5B et 5C sont des photographies du matériau obtenu après cette pyrolyse. Il est constaté, là encore, la présence préférentielle des fissures « F » au sein de la matrice obtenue par pyrolyse, plutôt qu'à l'interface phase de matrice préliminaire / phase de matrice obtenue par pyrolyse. Cela confirme la bonne adhésion de la phase de matrice obtenue par pyrolyse au revêtement et au renfort fibreux sous-jacents.

### Exemple 2

Un promoteur d'adhésion a été introduit dans la porosité d'une préforme fibreuse de fils SiC prédensifiée par une phase de matrice préliminaire SiC. Le promoteur d'adhésion utilisé était l'allyldiméthylchlorosilane.

Le promoteur d'adhésion ainsi introduit a été greffé à la surface de la phase de matrice préliminaire SiC en réalisant un premier chauffage. La réaction chimique correspondante a été effectuée en réacteur thermorégulé dans du cyclohexane pendant 24 heures en imposant une température de 40°C durant le premier chauffage. Un débit d'azote de 0,6 L/heure a été imposé durant cette réaction.

De la même manière que pour l'exemple 1, le greffage du promoteur d'adhésion a été confirmé par spectrométrie photoélectronique X (« X-Ray photoelectron spectrometry », analyse « XPS »).

Une fois le promoteur greffé, une résine polysilazane commercialisée sous la référence « PSZ 20 » par Clariant a été introduite dans la porosité de la préforme fibreuse.

Un deuxième chauffage à 250°C a ensuite été réalisé afin de polymériser la résine introduite et la lier au promoteur d'adhésion greffé.

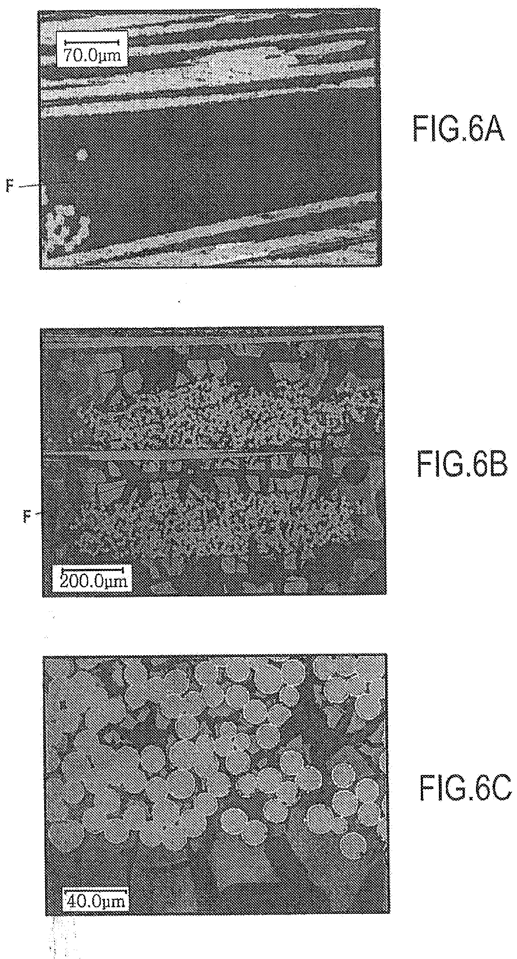

La figure 6A est une photographie du matériau obtenu après polymérisation de la résine polysilazane et avant sa pyrolyse. Comme dans l'exemple 1, la présence de fissures « F » préférentiellement au sein de la matrice polymérique est constatée, prouvant ainsi la bonne adhésion de cette matrice polymérique.

Une phase de matrice céramique a ensuite été obtenue par pyrolyse de la résine polysilazane, en appliquant un traitement thermique à 900°C. Les figures 6B et 6C sont des photographies du matériau obtenu après cette pyrolyse. Il est aussi constaté la présence préférentielle des fissures « F » au sein de la matrice obtenue par pyrolyse.

L'expression « compris(e) entre ... et ... » doit se comprendre comme incluant les bornes.

## Revendications

1. Procédé de fabrication d'une pièce en matériau composite comprenant au moins les étapes suivantes :
- introduction d'un promoteur d'adhésion (10) dans la porosité d'une préforme fibreuse formée par des fils revêtus par un revêtement (1) présentant à sa surface des groupements -OH, le promoteur d'adhésion comprenant un groupement G1 électroattracteur réactif selon une réaction de substitution ou d'addition nucléophile avec les groupements -OH, et un groupement réactif G2 choisi parmi : une fonction hydroxyle, un époxyde, un atome d'halogène, une fonction amine, une fonction carbonyle, une double liaison carbone-carbone ou une triple liaison carbone-carbone,
- greffage du promoteur d'adhésion à la surface du revêtement par réaction de substitution ou d'addition nucléophile des groupements -OH sur le groupement G1, ce greffage étant réalisé par un premier chauffage de la préforme fibreuse dans laquelle a été introduit le promoteur d'adhésion,
- introduction d'une résine (4) précurseur de céramique dans la porosité de la préforme fibreuse, après l'étape de greffage du promoteur d'adhésion,
- polymérisation de la résine introduite et liaison du promoteur d'adhésion greffé (20) à la résine par réaction chimique entre ces deux composés au niveau du groupement G2, cette polymérisation et cette liaison étant réalisées par un deuxième chauffage de la préforme fibreuse dans laquelle a été introduite la résine, et
- formation d'une phase de matrice céramique dans la porosité de la préforme fibreuse par pyrolyse de la résine polymérisée (40).

2. Procédé selon la revendication 1, dans lequel le procédé comprend en outre, avant introduction du promoteur, une étape de formation du revêtement (1) sur les fils par dépôt ou infiltration chimique en phase vapeur.

3. Procédé selon la revendication 1, dans lequel le procédé comprend en outre, avant introduction du promoteur, une étape de formation du revêtement (1) sur les fils par introduction d'un composé précurseur dans la porosité de la préforme et pyrolyse de ce composé précurseur.

4. Procédé selon l'une quelconque des revendications 1 à 3, dans lequel le matériau formant la surface du revêtement (1) est choisi parmi : le carbone, le carbone dopé au bore, le carbure de silicium, le nitrure de bore, le nitrure de bore dopé au silicium ou le nitrure de silicium.

5. Procédé selon l'une quelconque des revendications 1 à 4, dans lequel le groupement G1 est choisi parmi : un époxyde, une fonction carboxylique, un atome d'halogène, une double liaison carbone-carbone ou une triple liaison carbone-carbone.

6. Procédé selon l'une quelconque des revendications 1 à 5, dans lequel le groupement G2 est choisi parmi : une fonction hydroxyle, une fonction amine ou une double liaison carbone-carbone.

7. Procédé selon l'une quelconque des revendications 1 à 6, dans lequel le promoteur d'adhésion (10) présente, à l'état monomère, la formule générale suivante : G1 - E - G2, où E désigne une chaîne carbonée comprenant entre 1 et 10 atomes de carbone ou une chaîne silane, siloxane, silazane ou carbosilane comprenant entre 1 et 10 atomes de silicium.

8. Procédé selon la revendication 7, dans lequel E désigne une chaîne carbonée comprenant entre 1 et 5 atomes de carbone, ou dans lequel E désigne une chaîne silane, siloxane, silazane ou carbosilane comprenant entre 1 et 5 atomes de silicium.

9. Procédé selon la revendication 7 ou 8, dans lequel le promoteur (10) d'adhésion est un halogénosilane.

10. Procédé selon l'une quelconque des revendications 1 à 9, dans lequel la résine (4) est choisie parmi : les résines polysiloxane, les résines polysilazane, les résines polycarbosiloxane, les résines polycarbosilane, et les mélanges de telles résines.

## Patentansprüche

1. Verfahren zur Herstellung eines Teils aus Verbundmaterial, umfassend mindestens die folgenden Schritte:
- Einleiten eines Haftpromoters (10) in die Porosität einer faserigen Vorform, die von Fäden gebildet ist, die mit einer Beschichtung (1) beschichtet sind, die auf ihrer Oberfläche -OH-Gruppen aufweist, wobei der Haftpromoter eine elektroattraktive Gruppe G1 umfasst, die gemäß einer nukleophilen Substitutions- oder Additionsreaktion mit den - OH-Gruppen reaktiv ist, und eine reaktive Gruppe G2, die ausgewählt ist aus: einer Hydroxylfunktion, einem Epoxyd, einem Halogenatom, einer Aminfunktion, einer Carbonylfunktion, einer Kohlenstoff-Kohlenstoff-Doppelbindung oder einer Kohlenstoff-Kohlenstoff-Dreifachbindung,
- Pfropfen des Haftpromoters auf die Oberfläche der Beschichtung durch nukleophile Substitutions- oder Additionsreaktion der -OH-Gruppen auf der Gruppe G1, wobei diese Pfropfung durch eine erste Erhitzung der faserigen Vorform durchgeführt wird, in die der Haftpromoter eingeleitet wurde,
- Einleiten eines Keramikvorläuferharzes (4) in die Porosität der faserigen Vorform nach dem Pfropfungsschritt des Haftpromoters,
- Polymerisieren des eingeleiteten Harzes und Verbinden des gepfropften Haftpromoters (20) mit dem Harz durch chemische Reaktion zwischen diesen beiden Verbindungen im Bereich der Gruppe G2, wobei diese Polymerisation und diese Verbindung durch ein zweites Erhitzen der faserigen Vorform durchgeführt werden, in die das Harz eingeführt wurde, und
- Bilden einer keramischen Matrixphase in der Porosität der faserigen Vorform durch Pyrolyse des polymerisierten Harzes (40).

2. Verfahren nach Anspruch 1, wobei das Verfahren ferner vor dem Einleiten des Promoters einen Schritt des Bildens der Beschichtung (1) auf den Fäden durch Ablagern oder chemisches Infiltrieren in der Dampfphase umfasst.

3. Verfahren nach Anspruch 1, wobei das Verfahren ferner vor dem Einleiten des Promoters einen Schritt des Bildens der Beschichtung (1) auf den Fäden durch Einleiten einer Vorläuferverbindung in die Porosität der Vorform und Pyrolyse dieser Vorläuferverbindung umfasst.

4. Verfahren nach einem der Ansprüche 1 bis 3, wobei das Material, das die Oberfläche der Beschichtung (1) bildet, ausgewählt ist aus: Kohlenstoff, mit Bor dotiertem Kohlenstoff, Siliciumcarbid, Bornitrid, mit Silicium dotiertem Bornitrid oder Siliciumnitrid.

5. Verfahren nach einem der Ansprüche 1 bis 4, wobei die Gruppe G1 ausgewählt ist aus: einem Epoxyd, einer Carboxylfunktion, einem Halogenatom, einer Kohlenstoff-Kohlenstoff-Doppelbindung oder einer Kohlenstoff-Kohlenstoff-Dreifachbindung.

6. Verfahren nach einem der Ansprüche 1 bis 5, wobei die Gruppe G2 ausgewählt ist aus: einer Hydroxylfunktion, einer Aminfunktion oder einer Kohlenstoff-Kohlenstoff-Doppelbindung.

7. Verfahren nach einem der Ansprüche 1 bis 6, wobei der Haftpromoter (10) im Monomerzustand die folgende allgemeine Formel aufweist: G1 - E - G2, wobei E eine kohlenstoffhaltige Kette bezeichnet, die zwischen 1 und 10 Kohlenstoffatome aufweist, oder eine Silan-, Siloxan-, Silazan- oder Carbosilankette, die zwischen 1 und 10 Siliciumatome umfasst.

8. Verfahren nach Anspruch 7, wobei E eine kohlenstoffhaltige Kette bezeichnet, die zwischen 1 und 5 Kohlenstoffatome umfasst, oder wobei E eine Silan-, Siloxan-, Silazan- oder Carbosilankette bezeichnet, die zwischen 1 und 5 Siliciumatome umfasst.

9. Verfahren nach Anspruch 7 oder 8, wobei der Haftpromoter (10) ein Halogensilan ist.

10. Verfahren nach einem der Ansprüche 1 bis 9, wobei das Harz (4) ausgewählt ist aus: den Polysiloxanharzen, den Polysilazanharzen, den Polycarbosiloxanharzen, den Polycarbosilanharzen und den Gemischen derartiger Harze.

## Claims

1. A process for manufacturing a composite part comprising at least the following steps:
- introducing an adhesion promoter (10) into the pores of a fibrous preform formed by threads covered with a coating (1) having -OH groups on its surface, the adhesion promoter comprising an electron-withdrawing group G1 that is reactive according to a reaction of substitution or of nucleophilic addition with the -OH groups, and a reactive group G2 selected from: a hydroxyl function, an epoxide, a halogen atom, an amine function, a carbonyl function, a carbon-carbon double bond or a carbon-carbon triple bond,
- grafting the adhesion promoter to the surface of the coating by a reaction of substitution or nucleophilic addition of the -OH groups on the group G1, this grafting being carried out by a first heating of the fibrous preform into which the adhesion promoter has been introduced,
- introducing a ceramic precursor resin (4) into the pores of the fibrous preform, after the step of grafting the adhesion promoter,
- polymerizing the resin introduced and bonding the grafted adhesion promoter (20) to the resin by chemical reaction between these two compounds at the level of the group G2, said polymerizing and said bonding being carried out by a second heating of the fibrous preform into which the resin has been introduced, and
- forming a ceramic matrix phase in the pores of the fibrous preform by pyrolysis of the polymerized resin (40).

2. The process as claimed in claim 1, in which the process further comprises, before introduction of the promoter, a step of forming the coating (1) on the threads by chemical vapor deposition or infiltration.

3. The process as claimed in claim 1, in which the process further comprises, before introduction of the promoter, a step of forming the coating (1) on the threads by introducing a precursor compound into the pores of the preform and pyrolysis of this precursor compound.

4. The process as claimed in any one of claims 1 to 3, in which the material forming the surface of the coating (1) is selected from: carbon, carbon doped with boron, silicon carbide, boron nitride, boron nitride doped with silicon, or silicon nitride.

5. The process as claimed in any one of claims 1 to 4, in which the group G1 is selected from: an epoxide, a carboxyl function, a halogen atom, a carbon-carbon double bond or a carbon-carbon triple bond.

6. The process as claimed in any one of claims 1 to 5, in which the group G2 is selected from: a hydroxyl function, an amine function or a carbon-carbon double bond.

7. The process as claimed in any one of claims 1 to 6, in which, in the monomeric state, the adhesion promoter (10) has the following general formula: G1 - E - G2, where E denotes a carbon chain comprising between 1 and 10 carbon atoms or a silane, siloxane, silazane or carbosilane chain comprising between 1 and 10 silicon atoms.

8. The process as claimed in claim 7, in which E denotes a carbon chain comprising between 1 and 5 carbon atoms, or in which E denotes a silane, siloxane, silazane or carbosilane chain comprising between 1 and 5 silicon atoms.

9. The process as claimed in claim 7 or 8, in which the adhesion promoter (10) is a halosilane.

10. The process as claimed in any one of claims 1 to 9, in which the resin (4) is selected from: polysiloxane resins, polysilazane resins, polycarbosiloxane resins, polycarbosilane resins, and mixtures of such resins.
